# EUROPÄISCHE PATENTSCHRIFT

(11) **EP 2 461 402 B1**
(45) Veröffentlichungstag und Bekanntmachung des Hinweises auf die Patenterteilung: **21.09.2016**
(21) Anmeldenummer: 11190893.5
(22) Anmeldetag: 28.11.2011
(51) Int. Cl.: H01M 4/90, H01M 8/083, H01M 4/88, C25B 11/03, C25B 11/04, C25B 1/46

(54) **Sauerstoffverzehrelektrode und Verfahren zu ihrer Herstellung**
Oxygen-consuming electrode and method for its production
Electrode catalytique consommant de l'oxygène et son procédé de fabrication

(30) Priorität: 03.12.2010 DE 102010062421
(43) Veröffentlichungstag der Anmeldung: 06.06.2012
(73) Patentinhaber: Covestro Deutschland AG, 51373 Leverkusen (DE)
(72) Erfinder: Bulan, Andreas, 40764 Langenfeld (DE); Kintrup, Jürgen, 51373 Leverkusen (DE); Eiden, Stefanie, 51371 Leverkusen (DE)
(74) Vertreter: Levpat

(56) Entgegenhaltungen:
- EP-A2- 1 728 896
- WO-A1-2009/131554
- JP-A- 9 306 509
- IMAD MOUSSALLEM ET AL: "Chlor-alkali electrolysis with oxygen depolarized cathodes: history, present status and future prospects", JOURNAL OF APPLIED ELECTROCHEMISTRY, KLUWER ACADEMIC PUBLISHERS, DO, Bd. 38, Nr. 9, 14. Mai 2008 (2008-05-14), Seiten 1177-1194, XP019606285, ISSN: 1572-8838

## Beschreibung

Die Erfindung betrifft eine Sauerstoffverzehrelektrode, insbesondere für den Einsatz in der Chloralkali-Elektrolyse, mit einer neuartigen Beschichtung sowie eine Elektrolysevorrichtung. Die Erfindung betrifft ferner ein Herstellungsverfahren für die Sauerstoffverzehrelektrode sowie ihre Verwendung in der Chloralkali-Elektrolyse oder Brennstoffzellentechnik.

Die Erfindung geht aus von an sich bekannten Sauerstoffverzehrelektroden, die als flächige Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzten. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Als Katalysator für die Reduktion von Sauerstoff sind eine Vielzahl von Verbindungen beschrieben. Praktische Bedeutung als Katalysator für die Reduktion von Sauerstoff in alkalischen Lösungen haben davon jedoch nur Platin und Silber erlangt.

Platin besitzt eine sehr hohe katalytische Aktivität für die Reduktion von Sauerstoff. Wegen der hohen Kosten von Platin wird dieses ausschließlich in geträgerter Form eingesetzt. Die Beständigkeit kohlenstoffgeträgerter Platinelektroden im Dauerbetrieb ist jedoch unzureichend, vermutlich, weil durch Platin auch die Oxidation des Trägermaterials katalysiert wird. Kohlenstoff begünstigt zudem die unerwünschte Bildung von H₂O₂.

Silber hat ebenfalls eine hohe katalytische Aktivität für die Reduktion von Sauerstoff.

Obwohl die kohlenstoffgeträgerten Silberkatalysatoren haltbarer sind als die entsprechenden PlatinKatalysatoren, ist die Langzeitstabilität unter den Bedingungen in einer der Sauerstoffverzehrelektrode, insbesondere im Einsatz für die Chlor-Alkali-Elektrolyse beschränkt. Silberkatalysatoren werden daher bevorzugt in ungeträgerter Form eingesetzt.

Bei der Herstellung von SVE mit ungeträgertem Silber-Katalysator kann das Silber zumindest teilweise in Form von Silberoxiden eingebracht werden, welche dann zu metallischem Silber reduziert werden. Die Reduktion erfolgt entweder bei der Inbetriebnahme der Elektrolyse, in welcher bereits Bedingungen für eine Reduktion von Silberverbindungen bestehen, oder in einem gesonderten Schritt durch vorzugsweise elektrochemische Weise.

Bei der Herstellung von Sauerstoffverzehrelektroden mit ungeträgertem Silberkatalysatoren lässt sich prinzipiell zwischen trockenen und nassen Fertigungsverfahren unterscheiden.

Bei den trockenen Verfahren wird ein Gemisch aus Katalysatoren und polymerer Komponente mit einem Mischer, der schnell laufende Schlagwerkzeuge aufweist zur einer Mischung verarbeitet, die auf das elektrisch leitende Trägerelement aufgebracht und bei Raumtemperatur verpresst wird. Ein solches Verfahren ist in EP 1728896 A2 beschrieben. Das in EP 1728896 beschriebene Vorprodukt besteht aus 3 - 15 Teilen PTFE, 70-95 Teilen Silberoxid und 0-15 Teilen Silber-Metall-Pulver.

Bei den nassen Fertigungsverfahren wird ein Vorprodukt in Form einer Paste oder einer Suspension enthaltend feine Silberpartikeln und eine polymere Komponente verwendet. Als Suspensionsmittel wird in der Regel Wasser verwendet, es können aber auch andere Flüssigkeiten wie Alkohole oder deren Gemische mit Wasser verwendet werden. Bei der Herstellung der Pasten oder Suspension können oberflächenaktive Substanzen zugegeben werden, um deren Stabilität zu erhöhen. Die Pasten werden mittels Siebdruck oder Kalandrieren auf das Trägerelement aufgebracht, während die weniger viskosen Suspensionen üblicherweise auf das Trägerelement aufgesprüht werden. Nach der Trocknung erfolgt bei Temperaturen im Bereich des Schmelzpunktes des Polymers die Sinterung. Hierbei werden die zugesetzten Hilfsmittel wie Emulgatoren oder Verdickungsmittel entfernt. Ein solches Verfahren wird zum Beispiel in US20060175195 A1 beschrieben. Das Verhältnis von PTFE zu Silber in dem Vorprodukt entspricht dem beim trockenen Verfahren üblichen Verhältnis.

Die SVE trennt üblicherweise Elektrolyt und Gasraum und weist eine elektrisch leitende Schicht mit einem Katalysator auf, ind bzw. an der die elektrochemische Reaktion stattfindet., z. B. erfolgt die Reduktion von Sauerstoff an der Dreiphasengrenze von Elektrolyt, Katalysator und Reaktantgas . Die Grenzschicht wird im allgemeinen durch die Oberflächenspannung des Elektrolyten auf dem hydrophoben Elektrodenmaterial entgegen dem hydrostatischen Druck des Elektrolyten auf die SVE in der SVE gehalten. Dabei ist jedoch nur ein geringes Druckgefälle zwischen Gasseite und Flüssigkeitsseite zulässig. Ist der gasseitige Druck zu hoch, so bricht das Gas durch die SVE durch und die SVEwird in diesem Bereich in ihrer Funktion gestört und der Elektrolysevorgang wird unterbrochen. Ist andererseits der Flüssigkeitsdruck zu hoch, so wird die Dreiphasengrenze aus dem den Katalysator enthaltenden Bereich der SVEherausgedrückt, was die Funktion der SVE ebenfalls stört und bei weiterer Druckerhöhung zu einem Flüssigkeitsdurchbruch von Elektrolyt in den Gasraum führt. Bei senkrechter Elektrodenanordnung, wie sie z. B. bei Membranelektrolysen notwendig ist, um das Zielprodukt Chlor günstig abführen zu können, führt dies zu einer Begrenzung der Bauhöhe der Gasdiffusionselektroden, da sonst oben Gas an der SVE in den Kathodenraum sowie unten Elektrolyt in den Gasraum durchdrückt. Die technisch realisierbare Bauhöhe bleibt deshalb auf ca. 20-30 cm beschränkt, was für die marktüblichen Membranelektrolyseure unzureichend ist ist, da Lösungen zur Druckkompensation gefunden und in technisch aufwendigen Konstruktionen realisiert werden müssen.

In DE 19622744 C1 wird eine elektrochemische Halbzelle beschrieben, bei welcher der Gasraum in zwei oder mehrere übereinanderliegende Gastaschen aufgeteilt ist, in denen eine Gaszufuhr bzw. Gasabfuhr über getrennte Öffnungen erfolgt und der Druck auf der Elektrolytseite der Elektrode gegenüber dem Druck auf der Gasseite der Elektrode durch eine Öffnung der Gastaschen zum Elektrolyten weitgehend kompensiert wird. Auf diese Weise lasen sich Halbzellen mit Gasdiffusionselektroden mit über einem Meter Höhe verwirklichen. Die Konstruktion ist jedoch sehr aufwändig und lässt sich nicht ohne weiteres in eine konventionelle Einheit einbauen.

In WO0157290 A1 wird eine Halbzelle beschrieben, bei welcher die Flüssigkeit über einen Percolator entlang der SVEgeführt wird. Bei dieser Anordnung lastet keine Flüssigkeitssäule auf der Flüssigkeitsseite der SVE, und es baut sich kein Druckprofil über die Bauhöhe der Zelle auf. Der in WO0157290A1 beschriebene Aufbau ist jedoch sehr aufwändig. Um einen gleichmäßigen Laugefluss und eine gleichmäßige Beaufschlagung der SVE mit Katholyt zu gewährleisten, müssen Percolator, Ioneaustauschermembran und SVE sehr genau positioniert und eingebaut sein.

Eine weitere Möglichkeit zur Verhinderung von störenden Gas- bzw. Flüssigkeitsdurchbrüchen durch die SVE besteht darin, dass die SVE gasseitig mit einer hydrophoben Schicht versehen wird. Die hydrophobe Schichtwird unter Hitze und Druck mit der SVE verbunden. Entsprechende SVEs wurden von der Firma E-TEK unter dem Namen ESNS ™ angeboten. (Siehe Frederico, Martinelli und Pinter in Modern Chlor-Alkali Technology, Band 8" Blackwell Science, Oxford).

Nachteil dieser Elektroden ist jedoch, dass die hydrophobe Schicht schlecht auf der SVE haftet, so dass es während der Elektrolyse leicht zu Rissen in der hydrophoben Schicht und auch bei längerem Betrieb zu einem Delaminieren kommt. Diese Elektroden sind daher für den Praxisbetrieb nicht geeignet.

Eine weitere Ausführung zum Erreichen hoher Bauhöhen ist die sogenannte "Zero Gap" Anordnung. Bei dieser liegt die SVE direkt auf der Ionenaustauschermembran auf. Diese Anordnung wird üblicherweise auch in der Brennstoffzellen-Technologie angewandt. Die Natronlauge wird hierbei durch die SVE bis zur Gasseite der SVE drainiert und fließt dort ab. Nachteilig hierbei ist, dass die sich bildenden Natronlauge durch die SVE zur Gasseite geleitet werden muss, hierbei das Porensystem blockieren kann und anschließend an der SVE nach unten fließen muss. Durch dass Ablaufen auf der Gaseite der SVE kann sich ein Flüssigkeitsfilm aus Natronlauge ausbilden der zu einer Verstopfung der Poren der SVE führt, z.B. durch Flüssigkeitsansammlung in den Poren oder durch Auskristallisation von Natriumhydroxid in den Poren. Weiterhin kann der ablaufende Flüssigkeitsfilm eine Stofftransportbehinderung für den Sauerstoff (Reaktantengas) verursachen. Es hat sich weiterhin herausgestellt, dass in der Zero Gap Anordnung auch sehr hohe Natronlauge-Konzentrationen gebildet werden, wobei die Ionenaustauschermembranen gegen diese hohen Konzentrationen nicht langzeitstabil sind (Lipp et al, J. Appl. Electrochem. 35 (2005)1015 - Los Alamos National Laboratory "Peroxide formation during chlor-alkali electrolysis with carbon-based ODC"). Aus der JPH09/306509 ist zusätzlich eine Sauerstoffreduktionselektrode einer Metall/Luft Batterie bekannt, bei der die katalytisch aktive Oberfläche mit einem in Lösungsmitteln löslichen Fluorpolymer beschichtet ist.

Es ist somit festzustellen, dass die bisher bekannten Techniken zur Herstellung von Sauerstoffverzehrelektroden größerer Bauhöhen große Schwächen in Bezug auf Durchführbarkeit und Stabilität im Dauerbetrieb aufweisen.

Die Aufgabe der vorliegenden Erfindung besteht darin, eine Sauerstoffverzehrelektrode, insbesondere für den Einsatz in der Chloralkali-Elektrolyse, bereitzustellen, die die vorstehenden Nachteile überwindet und ein Betreiben bei großen Bauhöhen ermöglicht.

Spezielle Aufgabe der Erfindung ist es ein SVE bereitzustellen, die die Nachteile der bekannten Konstruktionen vermeidet, welche sich problemlos in bestehende Membranelektrolyseure einbauen lässt und eine hohe Standzeit aufweist. Weitere Aufgabe der Erfindung ist es ein einfaches Mittel zur Verbesserung oder Reparatur bestehender Sauerstoffverzehrelektroden bereitzustellen, die undicht geworden sind oder in ihrer Leistung nicht hinreichend (geworden) sind.

Die Aufgabe wird dadurch gelöst, dass die an sich bekannten Sauerstoffverzehrelektroden (SVE) mit einer Schicht aus einem Fluorpolymer versehen werden, wobei die Fluorpolymer-Schicht in Form einer Lösung in einem z.B. durch Verdunstung entfernbaren Lösungsmittel auf die der Gasseite der SVK zugewandten Seite der SVE aufgebracht wird.

Gegenstand der Erfindung ist eine Sauerstoffverzehrelektrode, aufweisend mindestens einer elektrisch leitenden Träger und eine auf dem Träger befindliche Gasdiffusionsschicht mit einer katalytisch aktiven Komponente, wobei die Sauerstoffverzehrelektrode zusätzlich mit einem in Lösungsmittel löslichen Fluorpolymer beschichtet ist, und dadurch gekennzeichnet, dass als katalytisch aktive Komponente Silber, Silber-I-Oxid oder Silber-II-Oxid, oder Gemische von Silber und Silberoxid ausgewählt sind.

Bevorzugt ist eine neue Sauerstoffverzehrelektrode, dadurch gekennzeichnet, dass die Sauerstoffverzehrelektrode auf ihrer einen, dem Gas, insbesondere dem Sauerstoff enthaltenden Gas, zugewandten Seite mit einem in Lösungsmitteln löslichen Fluorpolymer beschichtet ist. Die dem Gas zugewandte Seite der SVE bildet nach dem Einbau, beispielsweise in einen Elektrolyseur die Wand des Gasraums in dem sich das für die Elektrolyse benötigte Sauerstoff enthaltende Gas befindet. Gängige Fluorpolymere wie Polytetrafluorethylen (PTFE) sind in Lösungsmitteln nicht löslich. Es gibt jedoch eine Anzahl von fluorierten Copolymeren und auch Terpolymeren mit speziellen Monomerbausteinen, welche in einer Reihe von fluorierten Lösungsmitteln löslich sind. Diese sind bevorzugt einzusetzen. Bei den speziellen Monomeren handelt es sich in erster Linie um Perhalo 2,2-alkyl-1,3 dioxole, insbesondere 2,2-Bistrifluoromethyl-4,5-difluoro-1,3-dioxol (PDD) und Perfluoro 2-methylen-4-methyl-1,3-dioxolan (PMD). Diese Monomere können mit weiteren fluorierten Monomeren wie Tetrafluorethylen, Hexafluoropropylen, Perfluoro(butenylvinylether), und anderen fluorierten Olefinen oder fluorierten Vinylethern zu Copolymeren oder Terpolymeren umgesetzt werden..

Die Glasübergangstemperatur (TG) des genannten PDD- Homopolymers beträgt beispielsweise 335 °C. Die Co- oder Terpolymere weisen niedrigere Glasübergangstemperaturen auf, wobei die Glasübergangstemperatur in der Regel entsprechend dem Comonomerengehalt sinkt. Ein Comonomer aus PDD und TFE mit einem PDD-Gehalt von etwa 11,2 Mol-% weist eine TG von 57 ° C auf, ein Copolymer einem PDD-Gehalt von etwa 56,9 Mol-% weist eine TG von 119 ° C, ein Copolymer einem PDD-Gehalt von etwa 90Mol% weist eine TG von 260 ° C. Bevorzugt werden Copolymere, die bei den jeweiligen Gebrauchstemperaturen amorph sind.

Die genannten Co- und Terpolymere enthaltend Perhalo 2,2-alkyl-1,3 dioxole, insbesondere 2,2-bistrifluoromethyl-4,5-difluoro-1,3-dioxol (PDD) und Perfluoro 2-methylen-4-methyl-1,3-dioxolan (PMD) sind in fluorierten Lösungsmitteln löslich. Als aktive Löser geeignete fluorierte Lösungsmittel sind zum Beispiel Perfluoro(2-butyl tetrahydrofuran,) (FC-75), N(C4F9)3 (FC 40) , perfluorierte Kohlenwasserstoffe (FC-72) Perfluoromethylcyclohexane, Perfluorobenzene, und Perfluorodecalin oder deren Gemische. Die Löslichkeit ergibt sich jeweils aus der Zusammensetzung des Polymers und dem Lösungsmittel. Es sind Löslichkeiten von 1 Gew.-% bis etwa 20 Gew.-% beschrieben.

Bevorzugt ist daher eine neue Sauerstoffverzehrelektrode, dadurch gekennzeichnet, dass es sich bei dem löslichen Fluorpolymer um ein Copolymer aufgebaut mindestens aus einer Verbindung aus der Reihe der Perhalo 2,2-alkyl-1,3 dioxole, insbesondere der Perfluor 2,2-alkyl-1,3 dioxole, bevorzugt Perfluoro 2-methylen-4-methyl-1,3-dioxolan (PMD oder 2,2-bistrifluoromethyl-4,5-difluoro-1,3-dioxol (PDD), besonders bevorzugt 2,2-bistrifluoromethyl-4,5-difluoro-1,3-dioxol (PDD) und mindestens einem weiteren Monomer aus der Reihe der perfluorierten Alkenverbindungen, bevorzugt fluorierten Olefinen oder fluorierten Vinylethern insbesondere Tetrafluorethylen, Hexafluorpropylen oder Perfluoro(butenylvinylether) handelt.

Die Firma DuPont bietet spezielle Copolymere aus 2,2-bistrifluoromethyl-4,5-difluoro-1,3-dioxol (PDD) und Tetrafluorethylen unter den Markennamen Teflon AF 1600 (mit einem Anteil von ca. 35 % TFE/ 65 % PDD, und einer TG 160°C) und Teflon Af 2400 (mit einem Anteil von ca. 13 % TFE/ 87 % PDD, und einer TG 240 °C) als Harz und auch als Lösung in perfluorierten Lösungsmitteln an. Ein weiteres Copolymer, Teflon AF 1601, hat die gleiche Monomerenzusammensetzung, Glasübergangstemperatur sowie eine höhere Löslichkeit wie Teflon AF 1601, die mittlere Molekularmasse ist jedoch niedriger. Diese ausgewählten löslichen Fluorpolymere werden ganz besonders bevorzugt in der SVE eingesetzt.

Lösungen von Polymeren in flüchtigen Lösungsmitteln lassen sich in an sich bekannter Weise für Beschichtungen der SVE verwenden.

Durch Beschichtungen mit den vorgenannten Lösungen von Polymeren in flüchtigen Lösungsmitteln lassen sich sehr dünnen Beschichtungen von 1 µm und dünner einstellen. Es lassen sich aber auch größere Schichtdicken von 100 µm und mehr herstellen. Durch abwechselndes Beschichten und Verdampfen des Lösungsmittels lassen sich besonders hohe Schichtenstärken herstellen. Zum Erreichen einer homogenen, riss- und spannungsfreien Schicht sollte die Entfernung des Lösungsmittels bevorzugt in der Weise erfolgen, dass das Lösungsmittel gleichmäßig verdampft und sich ein gleichmäßiger Film ohne innere Spannungen bildet. Filme und Beschichtungen aus PDD enthaltenden Copolymere weisen in der Regel eine hohe Gasdurchlässigkeit auf.

In US 5326839 wird die Verwendung von PDD enthaltenden Copolymeren für die Herstellung von Filmen und Beschichtungen grundsätzlich beschrieben.

Es wurde nun überraschenderweise gefunden, dass sich mit Lösungen von Fluorpolymeren eine dauerhafte Beschichtung von Sauerstoffverzehrelektroden herstellen lässt und dass eine solche Beschichtung unter den Bedingungen in einer Elektrolysezelle eine störende Flutung des Gasraums mit Natronlauge die durch die Sauerstoffverzehrelektrode durchtreten kann bzw. andererseits ein Durchbruch von Sauerstoff enthaltendem Gas durch die Sauerstoffverzehrelektrode auf die Seite der Natronlauge auch bei höheren Drücken verhindert.

Die für die Beschichtung vorgesehenen SVE werden nach den an sich bekannten herkömmlichen Methoden hergestellt, zum Beispiel nach dem vorab beschriebenen Nass- oder Trockenherstellungsverfahren.

Die Beschichtung mit dem Fluorpolymeren erfolgt bevorzugt als letzter Fertigungsschritt im Anschluss an die eigentliche Herstellung der SVE.

So wird zum Beispiel eine nach dem in EP1728896A2 beschriebenen Verfahren hergestellte SVE auf der für den Gaskontakt vorgesehenen Seite gleichmäßig mit einer ein Fluorpolymer enthaltenden Lösung überzogen. Dies kann durch bekannte Beschichtungstechnologien wie Auftrag mittels eines Pinsels, einer Walze, eines Rakels oder eines anderen Werkzeugs, oder durch direktes Aufsprühen oder Gießen der Fluorpolymer enthaltenden Lösung auf die SVE erfolgen.

Die Beschichtung kann in einem Arbeitsgang oder in mehreren Arbeitsgängen mit zwischenzeitlicher Entfernung zumindest eines Teils des Lösungsmittels erfolgen.

Die Menge an aufgetragenem Fluorpolymer beträgt 1 bis 100g, bevorzugt 1 - 10 g pro Quadratmeter Elektrodenfläche.

Die Trocknung und Härtung der aufgetragenen Lösung erfolgt nach aus der Beschichtungstechnologie bekannten Techniken. Bevorzugt ist die Trocknung in einem Umlufttrockner, wobei das verdunstete das Lösungsmittel zurück gewonnen wird. Die Trocknung kann durch zusätzliche Erwärmung, zum Beispiel durch Infrarotstrahler, unterstützt werden.

Die Temperatur und Luftgeschwindigkeit werden so gewählt, dass den Eigenschaften des Polymers und des Lösungsmittels entsprechend eine gleichmäßige Filmbildung und Verfestigung des Polymers ohne Blasen- oder Rissbildung oder Verformung erfolgt.

Das Lösungsmittel wird insbesondere bis auf einen Restlösungsmittelgehalt von < 1 Gew.-%, bevorzugt < 0,1 Gew.-%, besonders bevorzugt < 0,05 Gew.-% entfernt.

Die Schichtdicke der Fluorpolymerschicht aus dem löslichen Polymeren nach der Trocknung beträgt bevorzugt 0,01 - 100 µm, besonders bevorzugt 0,1 - 10 µm.

Als Fluorpolymer werden besonders bevorzugt Copolymere oder Terpolymere eingesetzt enthaltend 2,2-bistrifluoromethyl-4,5-difluoro-1,3-dioxole (PDD) und ein oder weitere perfluorierte Monomere wie Polytetrafluorethylen, Polyhexafluorpropylen oder Polyvinylfluorid, bevorzugt Tetrafluorethylen. Entsprechende besonders geeignete Polymere und ihre Herstellung sind zum Beispiel in den Patenten US5276121, US 5310838 und US5354910, US 5408020 beschrieben.

Als Lösungsmittel werden perfluorierte Kohlenwasserstoffe und perfluorierte derivatisierte Kohlenwasserstoffe wie Perfluoromethylcyclohexan, Perfluorohexan, Perfluorobenzol, Perfluorodecalin, Perfluorotrialkylamine wie Perfluorotributylamin, Perfluorierte Polyether, und bevorzugt, Perfluoro(2-butyl tetrahydrofuran,), Handelsname Fluorinert® FC-75 der Firma 3M), eingesetzt.

Die Konzentration des Polymers wird so gewählt, dass einerseits eine möglichst hohe Konzentration erreicht wird und andererseits die Lösung mit dem gewählten Beschichtungsverfahren gut zu verarbeiten ist. Es wird eine möglichst hohe Konzentration an Polymeren im Lösungsmittel angestrebt. Wegen der geringen Löslichkeit der Fluorpolymere sind jedoch nur Lösungen von wenigen Gramm pro Liter erreichbar.

Es können grundsätzlich alle bekannten Sauerstoffverzehrelektroden mit der erfindungsgemäßen Beschichtung versehen werden. Bei Elektroden, bei welchen der Katalysator in in der Fertigung Form von Silberoxid zugegeben wird, kann die Beschichtung vor oder nach der Reduktion des Silberoxids erfolgen.

Besonders bevorzugt weist die neue Sauerstoffverzehrelektrode Mischungen auf, die als katalytisch aktive Komponente 70 bis 95 Gew.-% Silberoxid, insbesondere Silber-I-oxid, und 0 - 15 Gew.-% Silber-Metall sowie 3 - 15 Gew.-% eines nicht löslichen fluorierten Polymeren, insbesondere PTFE, enthalten.

Die neue Sauerstoffverzehrelektrode enthält bevorzugt in ihrer Gasdiffusionsschicht nichtlösliche fluorierte Polymere, insbesondere Polytetrafluorethylen (PTFE).

Das Trägerelement kann insbesondere in Form eines Netzes, Vlieses, Schaums, Gewebes, Geflechts, Gewirks, Streckmetall oder eines anderen durchlässigen flächigen Gebildes eingesetzt werden. Bevorzugt wird ein flexibles textiles Gebilde insbesondere aus Metallfäden eingesetzt. Als Material für das Trägerelement sind Nickel und mit Silber beschichtetes Nickel besonders geeignet.

Eine weitere bevorzugte Ausführung der neuen Sauerstoffverzehrelektrode ist daher dadurch gekennzeichnet, dass sie als Trägerelement ein flexibles textiles Gebilde, insbesondere aus Metallfäden, bevorzugt aus Nickel oder und mit Silber beschichtetes Nickel aufweist.

Die neue Sauerstoffverzehrelektrode wird bevorzugt als Kathode geschaltet, und insbesondere in einer Elektrolysezelle für die Elektrolyse von Alkalichloriden, bevorzugt von Natriumchlorid oder Kaliumchlorid, besonders bevorzugt von Natriumchlorid betrieben. Gegenstand der Erfindung ist folglich auch eine Elektrolysevorrichtung, insbesondere für die Chloralkalielektrolyse, aufweisend eine neue zuvor beschriebene Sauerstoffverzehrelektrode als Sauerstoff verzehrende Kathode. Alternativ kann die Sauerstoffverzehrelektrode bevorzugt als Kathode in einer Brennstoffzelle geschaltet werden.

Weiterer Gegenstand der Erfindung ist noch die Verwendung der neuen Sauerstoffverzehrelektrode zur Reduktion von Sauerstoff im Alkalischen, insbesondere in der alkalischen Brennstoffzelle, die Verwendung bei der Trinkwasseraufbereitung, beispielsweise zur Herstellung von Natriumhypochlorit oder die Verwendung in der Chlor-Alkalielektrolyse, insbesondere zur Elektrolyse von LiCl, KCl oder NaCl, oder die Verwendung als Elektrode in einer Metall/Luft Batterie.

Die neue SVE wird besonders bevorzugt bei der Chlor-Alkali-Elektrolyse und hier insbesondere bei der Natriumchlorid-(NaCl)-Elektrolyse eingesetzt.

Nicht Teil der Erfindung ist, dass sich an sich bekannte Sauerstoffverzehrelektrode durch Verwendung von in Lösungsmitteln löslichen Fluorpolymeren wie oben beschrieben verbessern oder hinsichtlich ihrer Gas- bzw. Flüssigkeitsdurchlässigkeit verbessern lassen. Nicht Teil der Erfindung ist daher auch die Verwendung von in Lösungsmitteln löslichen Fluorpolymeren zur Reparatur, Abdichtung oder Verbesserung schadhafter oder gebrauchter Sauerstoffverzehrelektroden.

Es handelt sich bei dem löslichen Fluorpolymer für diesen Verwendungszweck um die oben genannten löslichen Fluorpolymeren insbesondere um ein Copolymer aufgebaut mindestens aus einer Verbindung aus der Reihe der Perhalo 2,2-alkyl-1,3 dioxole, insbesondere der Perfluor 2,2-alkyl-1,3 dioxole, bevorzugt Perfluoro 2-methylen-4-methyl-1,3-dioxolan (PMD oder 2,2-bistrifluoromethyl-4,5-difluoro-1,3-dioxol (PDD), besonders bevorzugt 2,2-bistrifluoromethyl-4,5-difluoro-1,3-dioxol (PDD) und mindestens einem weiteren Monomer aus der Reihe der perfluorierten Alkenverbindungen, bevorzugt fluorierten Olefinen oder fluorierten Vinylethern insbesondere Tetrafluorethylen, Hexafluorpropylen oder Perfluoro(butenylvinylether).

Die Erfindung wird nachfolgend durch die Beispiele, welche jedoch keine Beschränkung der Erfindung darstellen, näher erläutert.

### Beispiel

3,5 kg einer Pulvermischung, bestehend aus 7 Gew.-% PTFE-Pulver, 88 Gew.-% Silber (I)-Oxid und 5 Gew.-% Silberpulver des Typs 331 der Fa. Ferro, wurden in einem Mischer der Fa. Eirich, Typ R02, ausgerüstet mit einem Sternwirbler als Mischelement, bei einer Drehzahl von 6000 U/min so gemischt, dass die Temperatur der Pulvermischung 55°C nicht übersteigt. Dies wurde dadurch erreicht, dass der Mischvorgang unterbrochen und die Mischung abgekühlt wurde. Insgesamt wurde das Mischen sechsmal durchgeführt. Nach dem Mischen wurde die fertige Pulvermischung mit einem Sieb mit einer Maschenweite von 1,0 mm gesiebt..

Die gesiebte Pulvermischung wurde anschließend auf ein Netz aus Nickeldrähten mit einer Drahtdicke von 0,2 mm und einer Maschenweite von 0,5 mm auf einer Fläche von 19 cm x 25 cm aufgebracht. Das Aufbringen erfolgte mit Hilfe einer 2 mm dicken Schablone, wobei das Pulver mit einem Sieb mit einer Maschenweite von Immaufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,5 kN/cm verpresst. Der Walzenpresse wurde die vorgefertigte Gasdiffusionselektrode entnommen.

Die vorgefertigte Gasdiffusionselektrode wurde auf der Seite des Trägerelements mit 50 g einer 1Gew.-%igen Teflon AF 1600 (Copolymer aus ca 35 % TFE/ 65 % PDD, Tg 160°C, Hersteller: Fa. DuPont de Nemours) Lösung in FC-75 (Perfluoro(2-butyl tetrahydrofuran,)) besprüht (Beladung entsprechend 9,5 g Feststoff/m²). Das Lösungsmittel wurde durch Erwärmen in einem Trockenschrank bei 60 °C über 2 h entfernt.

Die so hergestellte Sauerstoffverzehrkathode wurde bei der Elektrolyse einer Natriumchlorid-Lösung in einer Elektrolysezelle mit einer Ionenaustauschermembran von DuPONT N982WX und einem Natronlaugespalt zwischen Sauerstoffverzehrkathode und Membran von 3mm eingesetzt. Der Natronlauge-Spalt war komplett mit Natronlauge geflutet. In dem Laugespalt wurde ein Überdruck von 120 mbar und auf der Gasseite der Sauerstoffverzehrkathode ein Überdruck von 10 mbar (gegenüber Umgebungsdruck) Sauerstoff eingestellt. Die Zellspannung bei einer Stromdichte von 4 kA/m², einer Elektrolyttemperatur von 90° C, und einer Natronlauge-Konzentration von 32 Gew.-% betrug 2,1 V. Die Elektrolyse wurde unter diesen Bedingungen über 100 Tage betrieben, ohne dass es zu störenden Durchbrüchen von Flüssigkeit bzw. Gas durch die Elektrode kam.

## Patentansprüche

1. Sauerstoffverzehrelektrode, aufweisend mindestens einen elektrisch leitenden Träger und eine auf dem Träger befindliche Gasdiffusionsschicht mit einer katalytisch aktiven Komponente, wobei die Sauerstoffverzehrelektrode zusätzlich mit einem in Lösungsmitteln löslichen Fluorpolymer beschichtet ist, und **dadurch gekennzeichnet dass** als katalytisch aktive Komponente Silber, Silber-I-Oxid oder Silber-II-Oxid, oder Gemische von Silber und Silberoxid ausgewählt sind.

2. Sauerstoffverzehrelektrode nach Anspruch 1, **dadurch gekennzeichnet, dass** die Sauerstoffverzehrelektrode auf ihrer einen, dem Gas zugewandten Seite mit einem in Lösungsmitteln löslichen Fluorpolymer beschichtet ist.

3. Sauerstoffverzehrelektrode nach einem der Ansprüche 1 und 2, **dadurch gekennzeichnet dass** es sich bei dem löslichen Fluorpolymer um ein Copolymer aufgebaut mindestens aus einer Verbindung aus der Reihe der Perhalo 2,2-alkyl-1,3 dioxole, und mindestens einem weiteren Monomer aus der Reihe der perfluorierten Alkenverbindungen handelt.

4. Sauerstoffverzehrelektrode nach einem der Ansprüche 1 bis 3, **dadurch gekennzeichnet, dass** es sich bei dem Lösungsmittel um eine perfluorierte Kohlenwasserstoffverbindung oder eine perfluorierte derivatisierte Kohlenwasserstoffverbindung oder ein Gemisch dieser Verbindungen handelt.

5. Sauerstoffverzehrelektrode nach einem der Ansprüche 1 bis 4, **dadurch gekennzeichnet dass** die Elektrode mit 1 bis 100 g, Fluorpolymer pro Quadratmeter Elektrodenfläche beschichtet ist.

6. Sauerstoffverzehrelektrode nach einem der Ansprüche 1 bis 5, **dadurch gekennzeichnet dass** die Schichtdicke der Fluorpolymerschicht 0,01 - 100 µm, beträgt.

7. Sauerstoffverzehrelektrode gemäß einem der Ansprüche 1 bis 6, **dadurch gekennzeichnet, dass** sie Mischungen aufweist, die als katalytisch aktive Komponente 70 bis 95 Gew.-% Silberoxid, 0 - 15 Gew.-% Silber-Metall-Pulver und 3 - 15 Gew.-% sowie 3 - 15 Gew.-% eines nicht löslichen fluorierten Polymeren, insbesondere PTFE, enthalten.

8. Sauerstoffverzehrelektrode nach einem der Ansprüche 1 bis 7, **dadurch gekennzeichnet, dass** sie in der Gasdiffusionsschicht nichtlösliche fluorierte Polymere enthält.

9. Sauerstoffverzehrelektrode nach einem der Ansprüche 1 bis 8, **dadurch gekennzeichnet, dass** sie als Trägerelement ein flexibles textiles Gebilde aufweist.

10. Verfahren zur Herstellung einer Sauerstoffverzehrkathode nach einem der Ansprüche 1 bis 9, **dadurch gekennzeichnet dass** eine Lösung eines Fluorpolymers auf eine Sauerstoffverzehrelektrode, aufweisend mindestens ein elektrisch leitender Träger in Form eines Flächengebildes und eine Beschichtung des Trägers mit einer Gasdiffusionsschicht mit einer katalytisch aktiven Komponente aufgetragen oder aufgesprüht wird und dass das Lösungsmittel im Anschluss durch Verdunstung entfernt wird.

11. Verwendung der Sauerstoffverzehrelektrode nach einem der Ansprüche 1 bis 9 als Sauerstoff verzehrende Kathode in der Elektrolyse oder als Elektrode in einer alkalischen Brennstoffzelle oder als Elektrode in einer Metall/Luft-Batterie.

12. Elektrolysevorrichtung, insbesondere für die Chloralkalielektrolyse, aufweisend eine Sauerstoffverzehrelektrode nach einem der Ansprüche 1 bis 9 als Sauerstoff verzehrende Kathode.

## Claims

1. Oxygen-consuming electrode having at least one electrically conductive support and a gas diffusion layer which has a catalytically active component and is located on the support, where the oxygen-consuming electrode is additionally coated with a fluoropolymer which is soluble in solvents, **characterized in that** silver, silver(I) oxide or silver(II) oxide or mixtures of silver and silver oxide are selected as catalytically active component.

2. Oxygen-consuming electrode according to Claim 1, **characterized in that** the oxygen-consuming electrode is coated on its one side facing the gas with a fluoropolymer which is soluble in solvents.

3. Oxygen-consuming electrode according to either Claim 1 or 2, **characterized in that** the soluble fluoropolymer is a copolymer made up of at least a compound selected from the group consisting of perhalo-2,2-alkyl-1,3-dioxoles, and at least one further monomer selected from the group consisting of perfluorinated alkene compounds.

4. Oxygen-consuming electrode according to any of Claims 1 to 3, **characterized in that** the solvent is a perfluorinated hydrocarbon compound or a perfluorinated derivatized hydrocarbon compound or a mixture of these compounds.

5. Oxygen-consuming electrode according to any of Claims 1 to 4, **characterized in that** the electrode is coated with from 1 to 100 g of fluoropolymer per square meter of electrode area.

6. Oxygen-consuming electrode according to any of Claims 1 to 5, **characterized in that** the layer thickness of the fluoropolymer layer is 0.01-100 µm.

7. Oxygen-consuming electrode according to any of Claims 1 to 6, **characterized in that** it comprises mixtures containing, as catalytically active component, from 70 to 95% by weight of silver oxide, 0-15% by weight of silver metal powder and 3-15% by weight and also 3-15% by weight of an insoluble fluorinated polymer, in particular PTFE.

8. Oxygen-consuming electrode according to any of Claims 1 to 7, **characterized in that** it contains insoluble fluorinated polymers in the gas diffusion layer.

9. Oxygen-consuming electrode according to any of Claims 1 to 8, **characterized in that** it has a flexible textile structure as support element.

10. Process for producing an oxygen-consuming cathode according to any of Claims 1 to 9, **characterized in that** a solution of a fluoropolymer is applied or sprayed onto an oxygen-consuming electrode having at least one electrically conductive support in the form of a sheet-like structure and a coating of the support having a gas diffusion layer having a catalytically active component and **in that** the solvent is subsequently removed by evaporation.

11. Use of the oxygen-consuming electrode according to any of Claims 1 to 9 as oxygen-consuming cathode in electrolysis or as electrode in an alkaline fuel cell or as electrode in a metal/air battery.

12. Electrolysis apparatus, in particular for chloralkali electrolysis, having an oxygen-consuming electrode according to any of Claims 1 to 9 as oxygen-consuming cathode.

## Revendications

1. Electrode consommatrice d'oxygène, comprenant au moins un support conducteur de l'électricité et une couche de diffusion gazeuse se trouvant sur le support, ayant un composant catalytiquement actif, l'électrode consommatrice d'oxygène étant en outre revêtue d'un polymère fluoré soluble dans des solvants, et **caractérisée en ce que**, en tant que composant catalytiquement actif, sont choisis l'argent, l'oxyde d'argent-I ou l'oxyde d'argent-II, ou les mélanges d'argent et d'oxyde d'argent.

2. Electrode consommatrice d'oxygène selon la revendication 1, **caractérisée en ce que** l'électrode consommatrice d'oxygène est, sur l'une de ses faces dirigées vers le gaz, revêtue d'un polymère fluoré soluble dans des solvants.

3. Electrode consommatrice d'oxygène selon l'une des revendications 1 et 2, **caractérisée en ce que**, pour ce qui concerne le polymère fluoré soluble, il s'agit d'un copolymère constitué d'au moins un composé de la série des perhalogéno-2,2-alkyl-1,3-dioxoles, et d'au moins un monomère supplémentaire de la série des composés alcènes perfluorés.

4. Electrode consommatrice d'oxygène selon l'une des revendications 1 à 3, **caractérisée en ce que**, pour ce qui concerne le solvant, il s'agit d'un composé hydrocarboné perfluoré ou d'un composé hydrocarboné dérivatisé perfluoré, ou d'un mélange de ces composés.

5. Electrode consommatrice d'oxygène selon l'une des revendications 1 à 4, **caractérisée en ce que** l'électrode est revêtue de 1 à 100 g du polymère fluoré par mètre carré d'aire d'électrode.

6. Electrode consommatrice d'oxygène selon l'une des revendications 1 à 5, **caractérisée en ce que** l'épaisseur de couche de la couche du polymère fluoré est de 0,01 à 100 µm.

7. Electrode consommatrice d'oxygène selon l'une des revendications 1 à 6, **caractérisée en ce qu'**elle comprend des mélanges qui en tant que composants catalytiquement actifs contiennent 70 à 95 % en poids d'oxyde d'argent, 0 à 15 % en poids d'une poudre d'argent métallique et 3 à 15 % en poids, ainsi que 3 à 15 % en poids d'un polymère fluoré insoluble, en particulier le PTFE.

8. Electrode consommatrice d'oxygène selon l'une des revendications 1 à 7, **caractérisée en ce qu'**elle contient des polymères fluorés insolubles dans la couche de diffusion gazeuse.

9. Electrode consommatrice d'oxygène selon l'une des revendications 1 à 8, **caractérisée en ce qu'**elle comprend en tant qu'élément support une structure textile souple.

10. Procédé de fabrication d'une cathode consommatrice d'oxygène selon l'une des revendications 1 à 9, **caractérisé en ce qu'**on applique ou pulvérise une solution d'un polymère fluoré sur une électrode consommatrice d'oxygène, comprenant au moins un support conducteur de l'électricité sous forme d'une structure bidimensionnelle et un revêtement du support ayant une couche de diffusion gazeuse comportant un composant catalytiquement actif, et que le solvant est ensuite éliminé par évaporation.

11. Utilisation de l'électrode consommatrice d'oxygène selon l'une des revendications 1 à 9 en tant que cathode consommatrice d'oxygène lors d'une électrolyse, ou en tant qu'électrode dans une pile à combustible alcaline, ou en tant qu'électrode dans une batterie métal-air.

12. Dispositif d'électrolyse, en particulier pour l'électrolyse à l'alcali et au chlore, comprenant une électrode consommatrice d'oxygène selon l'une des revendications 1 à 9 en tant que cathode consommatrice d'oxygène.
